(19)

Europäisches Patentamt
European Patent Office
Office européen des brevets

(11) EP 1 865 620 A1

(12) **EUROPEAN PATENT APPLICATION**
published in accordance with Art. 158(3) EPC

(43) Date of publication:
**12.12.2007 Bulletin 2007/50**

(51) Int Cl.:
***H04B 7/08*** (2006.01)

(21) Application number: **06730786.8**

(22) Date of filing: **31.03.2006**

(86) International application number:
**PCT/JP2006/306838**

(87) International publication number:
**WO 2006/106920 (12.10.2006 Gazette 2006/41)**

(84) Designated Contracting States:
**DE FR GB**

(30) Priority: **31.03.2005 JP 2005105364**

(71) Applicant: **FUJITSU TEN LIMITED**
**Kobe-shi**
**Hyogo 652-8510 (JP)**

(72) Inventors:
• **TANIGUCHI, Isao**
**c/o FUJITSU TEN LIMITED**
**Kobe-shi, Hyogo 6528510 (JP)**

• **NAKAGAWA, Kiyotaka**
**c/o FUJITSU TEN LIMITED**
**Kobe-shi, Hyogo 6528510 (JP)**
• **TAKAYAMA, Kazuo**
**c/o FUJITSU TEN LIMITED**
**Kobe-shi, Hyogo 6528510 (JP)**

(74) Representative: **Skone James, Robert Edmund**
**Gill Jennings & Every LLP**
**Broadgate House**
**7 Eldon Street**
**London EC2M 7LH (GB)**

(54) **RECEIVING APPARATUS, SIGNAL PROCESSING CIRCUIT, AND RECEIVING SYSTEM**

(57) An object of the invention is to provide a receiving apparatus in which multipath noise can be reduced. In a diversity receiving apparatus (20), a delay amount of phase shifters (24a, 24b) is changed to reduce a multipath level (Mdc) detected by a multipath detecting unit (33). The multipath detecting unit (33), signal processing parts (23a, 23b), and a combiner (25) are provided to obtain a received signal based on received outputs of a plurality of antennas (21a, 21b) when receiving a radio wave signal modulated by a modulating method, such as an FM, in which no change in amplitude is produced. Therefore, the radio wave signal can be received in a better condition than when received using a single antenna. The multipath detecting unit (33) detects a change in amplitude of the received signal as the multipath level (Mdc). A signal combining is achieved by changing the delay amount of the phase shifters (24a, 24b) according to a predetermined combining condition, so that the multipath level (Mdc) detected by the multipath detecting unit (33) is reduced.

FIG. 1

EP 1 865 620 A1

## Description

TECHNICAL FIELD

The present invention relates to a receiving apparatus which receives radio wave signals through a plurality of antennas, a signal processing circuit, and a receiving system.

BACKGROUND ART

Conventionally, in a receiving apparatus which receives radio wave signals, in order to obtain information superimposed in the radio wave signals an output received through an antenna is electrically amplified, and is demodulated by a wave detection. In the radio wave signal, a carrier having a high-frequency band is modulated in some way to superimpose information thereon. The radio wave signal is exposed to disturbances while transmitting trough a space, and therefore the superimposed information can be damaged. Typical examples of the disturbances include phasing, noise, and the like. Modulation methods for radio wave signals include a method in which a change in amplitude of a carrier is provided and a method in which no change in amplitude of a carrier is provided. A frequency modulation (FM) method and a phase modulation (PM) method are typical in the method in which no change in amplitude of a carrier is provided.

In the mobile communication field, an FM broadcast receiving system uses a diversity receiving method in which two or more receiving antennas are used to combine waves received thereby and to improve transmission qua lity, as a method or technique for reducing multipath noise which is generated by changes in reception level and changes in phase due to changes in property of a receiving path such as phasing. Methods which are employed as a combining method in the diversity receiving method include a selection combining method in which each of the plurality of antennas is switched over depending on reception levels; an equal gain combining method in which a phase difference between two received waves is detected and two received waves having the same phase are produced and then combined; and a maximum ratio combining method in which received signals are weighted depending on reception levels to have the same phase and thereafter are combined.

The weighting in the maximum ratio combining method is carried out for the signals received by respective antennas, such that an S/N ratio as a ratio of noise power to signal power after a combining reaches a maximum value. In the maximum ratio combining method, a weighting proportional to a reception level and inversely proportional to noise power is carried out, and thereby a property is expected to be most improved, compared with the selection combining method and the equal gain combining method.

In connection with the frequency-modulation method, there is also disclosed a related art in which the diversity receiving method using the maximum ratio combining is used when a radio wave signal modulated by in particular an orthogonal frequency division multiplexing (OFDM) method is received (refer to Japanese Unexamined Patent Publication JP-A 2001-345780, for example). In this related art, the maximum ratio combining is carried out in such a way that signals received through antennas using a plurality of receiving systems are respectively subjected to digital signal processing, and maximum ratio combining is carried out by changing phase and weighting coefficient.

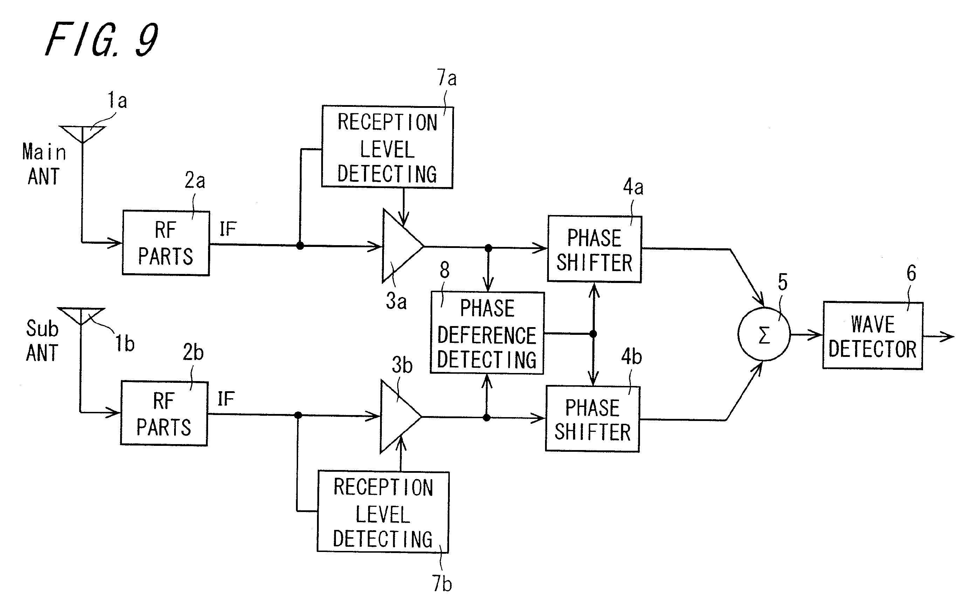

Fig. 9 schematically shows a configuration of a diversity receiving apparatus in which a conventional maximum ratio combining is carried out. In two antennas 1a and 1b, one antenna 1a is a main antenna and the other antenna 1b is a sub antenna. When radio waves are received by the respective antennas 1a and 1b, received signals are inputted into radio-frequency (RF) parts 2a and 2b, in which radio-frequency (RF) signal amplification and the like are carried out, respectively. In a case of receiving by a superheterodyne method, the RF parts 2a and 2b frequency-convert inputted radio-frequency signals to intermediate-frequency (IF) signals. The intermediate-frequency signals are subjected to signal processing such as amplification in signal processing parts 3a and 3b to reduce phase differences therebetween in phase shifters 4a and 4b, and combined in a combiner 5. A combined received signals are detected by a wave detector 6, and superimposed information is demodulated. Reception level detecting units 7a and 7b detect a signal level of the intermediate-frequency signal as a reception level. Signal processing parts 3a and 3b execute processings such as amplification for the respective signals in accordance with weighting carried out based on the detected outputs from the reception level detecting units 7a and 7b. Phase differences of the respective signals are detected by a phase difference detecting unit 8. The phase difference detecting unit 8 sets differences of delay amounts corresponding to the phase differences to the phase shifters 4a and 4b respectively, so that the detected phase differences are eliminated. The combiner 5 combines the signals, levels of which have been adjusted in the signal processing parts 3a and 3b and phase differences of which have been eliminated in the phase shifters 4a and 4b. The signals combined in the combiner 5 are inputted into the wave detector 6 and the information superimposed in the receiving radio wave is demodulated therein.

In the diversity receiving apparatus using the maximum ratio combining method as shown in Fig. 9, depending on receiving conditions or receiving statuses, properties may not be improved even though the reception level detecting units 7a and 7b detect reception levels and noise of the respective antennas 1a and 1b respectively and weighting is carried out in proportion to the reception level and in reverse proportion to the noise power of the noise.

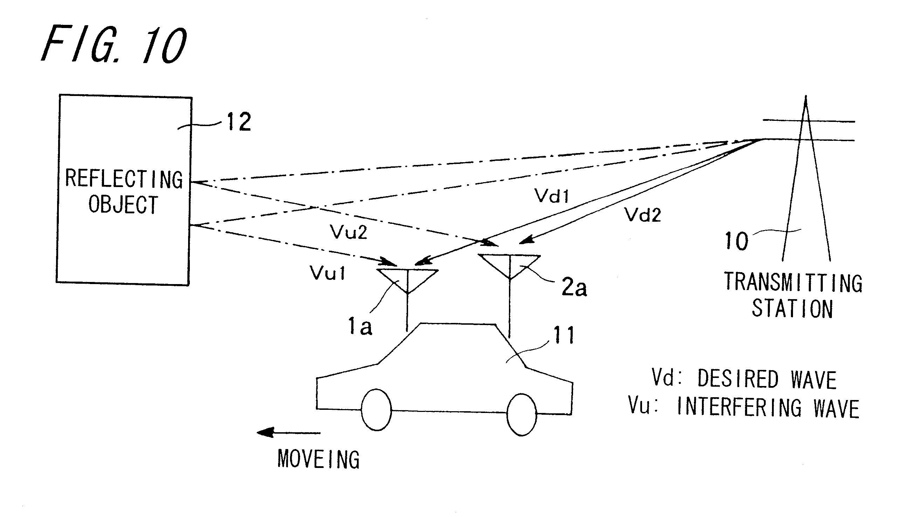

Fig. 10 shows a case in which a vehicle 11 receives a radio wave signal transmitted from a transmitting station 10 while moving in a direction away from the transmitting station 10. For example, assume a case in which a frequency of a carrier of the radio wave signal transmitted from the transmitting station 10 is 100 MHz and the vehicle 11 drives at a speed of 120 km/h. Moreover, when a reflecting object 12 is located on a front side of a moving direction of the vehicle 11, the vehicle 11 receives desired waves Vd1 and Vd2 directly received from the transmitting station 10 to the antennas 1a and 1b, as well as radio wave signals reflected by the reflecting object 12 as interfering waves Vu1 and Vu2, respectively. A physical wavelength $\lambda$ of a radio wave signal having 100 MHz is obtained as the following expression: $\lambda$ = 300,000 (km) / 100 (MHz) = 3 (m). With 120 km/h = 33.3 m/s, a time when the vehicle 11 moves by a half wavelength is obtained as the following expression: $(\lambda / 2) \div 33.3 = 45$ ms. A phase relationship between the desired wave Vd and the interfering wave Vu is changed from a same phase to an opposite phase at a frequency of about a half wavelength. The desired wave Vd and the interfering wave Vu are mutually enhanced when having the same phase, but are mutually eliminated when having the opposite phase. Therefore, strengths of the radio wave signals to be received by the respective antennas 1a and 1b are changed at a frequency of about 45 ms. In addition, a degree of the change varies depending on positions of the antennas 1a and 1b, or the like. Therefore, even when trying to carry out the maximum ratio combining, a combining property may be possibly worse than when the respective antennas 1a and 1b are separately used.

The interfering waves Vu1 and Vu2 are waves through a different path which result from that the desired waves Vd1 and Vd2 reach antennas 1a and 1b after being reflected by the reflecting object 12 without directly reaching the antennas 1a and 1b from the transmitting station 10. The difference in path leads to a difference in phase. The desired waves Vd1 and Vd2 and the interfering waves Vu1 and Vu2 are the same radio wave signals when transmitted from the transmitting station 10, and are periodically changed depending on phase differences when mixed with the phase difference remained. When a signal level is changed by interference between the radio wave signals passing through a plurality of propagating paths even in a modulating method in which a reception level of a carrier is not basically changed, such as the FM, the reception level of the carrier may be possibly changed, causing noise which results in poor reception. Such noise is called multipath noise.

DISCLOSURE OF INVENTION

An object of the invention is to provide a diversity receiving apparatus and method, capable of reducing multipath noise.

The invention provides a receiving apparatus comprising:

two or more antennas for receiving a signal;
a reception level detecting unit for detecting a reception level of the signal; and
a combining unit for combining the signal based on a combining condition,
the combining unit including:

a signal processing unit for increasing a level of the signal based on a predetermined coefficient;
a first multipath detecting unit for detecting a multipath level of each of the signals of the antennas; and
a second multipath detecting unit for detecting a multipath level of a signal combined by the combining unit,

the coefficient being changed based on the reception level detected by the reception level detecting unit, the multipath level detected by the first multipath detecting unit, and the multipath level detected by the second multipath detecting unit.

In the invention, it is preferable that when the reception level is more than a predetermined threshold value, the coefficient is changed based on the multipath level detected by the first multipath detecting unit, and the multipath level detected by the second multipath detecting unit.

In the invention, it is preferable that the combining unit includes a phase shifting unit for reducing a phase difference between the signals of the respective antennas, with respect to each of the signals, and the signals to be outputted by the phase shifting unit are independently outputted.

In the invention, it is preferable that the phase shifting unit further includes a delay part for delaying the signals of the antennas, and a correlating part for showing correlations between the signals of the respective antennas, and a delay amount of the delay part is changed so that a correlation of the correlating part is increased.

In the invention, it is preferable that the combining unit further includes a noise removing unit for removing incorporated noise involved in changing the combining condition.

The invention provides a signal processing circuit comprising a control unit for determining an amplification coefficient of a received signal based on a reception level of the received signal, a multipath level of the received signal, and a multipath level of a signal obtained by combining received signals.

In the invention, it is preferable that the control unit further includes a monitoring unit for monitoring a number of a determining operation of the amplification coefficient, and a limiting unit for limiting the determining operation when the number of the determining operation of the amplification coefficient has exceeded a predetermined number.

The invention provides a receiving system comprising:

two or more antennas for receiving a signal;
a reception level detecting unit for detecting a reception level of the signal;
a first multipath detecting unit for detecting a multipath level of the signal;
a combining unit for combining signals based on a combining condition; and
a second multipath detecting unit for detecting a multipath level of a signal combined by the combining unit,
the combining unit further including:

a signal processing unit for increasing a level of the signal based on a predetermined coefficient; and
a phase shifting unit for reducing a phase difference between signals of the respective antennas,

the receiving system further comprising a coefficient control unit for updating the coefficient based on the reception level detected by the reception level detecting unit, the multipath level detected by the first multipath detecting unit, and the multipath level detected by the second multipath detecting unit.

In the invention, it is preferable that the receiving system further includes a signal output control unit for outputting a noise removing signal along with outputting a change signal for the combining condition, and a noise removing unit for removing noise in response to the noise removing signal.

The invention provides a receiving apparatus comprising:

two or more antennas for receiving signals;
a reception level detecting unit for detecting reception levels of the signals; and
a combining unit for combining the signals based on a combining condition,
the combining unit including:

a signal processing unit for increasing a level of a signal based on a predetermined coefficient; and
a multipath detecting unit for detecting a multipath level of a signal combined by the combining unit,

the coefficient being changed based on the reception level detected by the reception level detecting unit, and the multipath level detected by the multipath detecting unit.

The invention provides a receiving apparatus comprising:

two or more antennas for receiving signals;
a combining unit for combining the signals based on a combining condition;
a signal processing unit for increasing a level of a signal based on a predetermined coefficient;
a first multipath detecting unit for detecting a multipath level of each of the signals of the antennas; and
a second multipath detecting unit for detecting a multipath level of a signal combined by the combining unit,
the coefficient being changed based on the multipath level detected by the first multipath detecting unit, and the multipath level detected by the second multipath detecting unit.

BRIEF DESCRIPTION OF THE DRAWINGS

Other and further objects, features, and advantages of the invention will be more explicit from the following detailed description taken with reference to the drawings wherein:

Fig. 1 is a block diagram illustrating a schematic configuration of a diversity receiving apparatus according to one embodiment of the invention;
Figs. 2A and 2B are waveform diagrams illustrating a relationship between a reception level and a multipath level, which are detected in a reception level detecting and multipath detecting unit and a multipath detecting unit of Fig. 1;
Fig. 3 is a block diagram illustrating a configuration of a phase shifter of Fig. 1;
Fig. 4 is a table illustrating a change condition for weighting control to a signal processing part, which is carried out in the weighting control of Fig. 1;

Fig. 5 is a table illustrating control contents in an area saying "WEIGHTING CONTROL ACCORDING TO MULTIPATH LEVEL" in Fig. 4;

Fig. 6 is a flow chart illustrating processing in which software of a DSP cancels various kinds of switching noise along with a phase focusing operation and a weighting coefficient change operation in the diversity receiving apparatus of Fig. 1;

Fig. 7 is a block diagram illustrating a configuration for limiting the weighting coefficient change operation with respect to the weighting control of Fig. 1;

Fig. 8 is a block diagram illustrating an example of a configuration in which a phase difference detecting unit of Fig. 1 detects a phase difference;

Fig. 9 is a block diagram schematically illustrating a configuration of a diversity receiving apparatus for carrying out a maximum ratio combining according to the related art; and

Fig. 10 is a diagram illustrating a case in which a vehicle receives a radio wave signal transmitted from a transmitting station while moving in a direction away from the transmitting station.

## BEST MODE FOR CARRYING OUT THE INVENTION

Hereinafter, referring to the drawings, preferred embodiments of the invention will be described in detail.

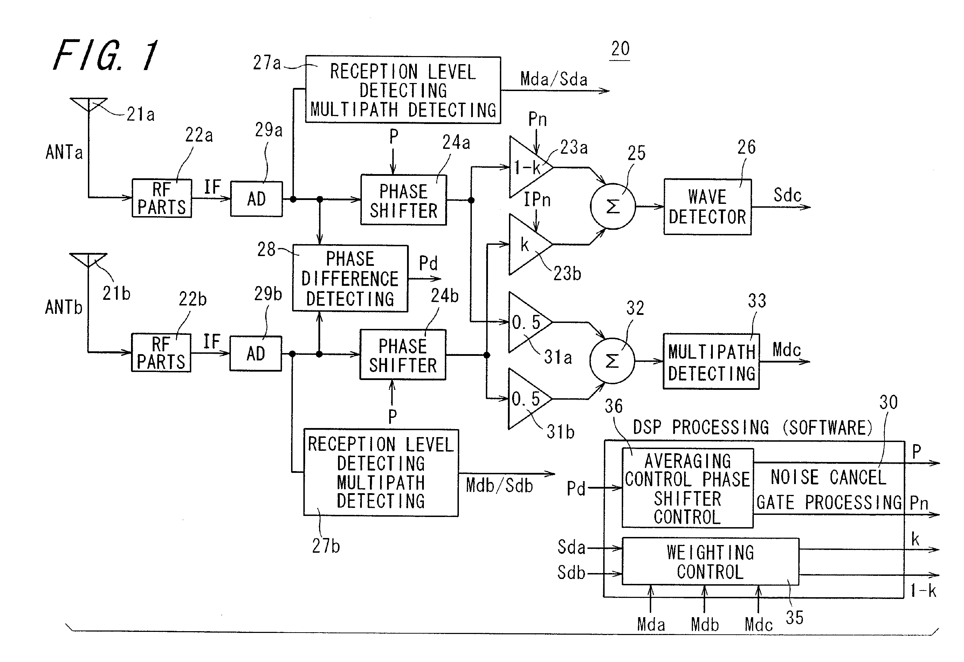

Fig. 1 shows a schematic configuration of a diversity receiving apparatus 20 as a receiving apparatus according to one embodiment of the invention. The diversity receiving apparatus 20 comprises antennas 21a and 21b, RF parts 22a and 22b, signal processing parts 23a and 23b as a signal processing unit, and phase shifters 24a and 24b as a phase shifting unit, each having 2 lines. The diversity receiving apparatus 20 further comprises a combiner 25 and a wave detector 26. In addition, the diversity receiving apparatus 20 further comprises two reception level detecting and multipath detecting units 27a and 27b, with respect to each line of the respective antennas 21a and 21b. A phase difference Pd between the respective lines is detected by a phase difference detecting unit 28. Since each signal processing is carried out with respect to a digital signal, in the respective lines intermediate frequency (IF) signals outputted from the RF parts 22a and 22b are converted from an analog signal into a digital signal in analog/digital converters (hereinafter, also referred to as an "AD converter") 29a and 29b, respectively. A setting of a delay amount in the phase shifters 24a and 24b and a setting of a weighting coefficient in the signal processing parts 25a and 25b are carried out by software processing using a digital signal processor (hereinafter, abbreviated as a "DSP") 30. Processing of the digital signal converted in the AD converters 29a and 29b can be achieved by a program which is previously set in the DSP 30.

Incidentally, the antennas 21a and 21b, the RF parts 22a and 22b, the signal processing parts 23a and 23b, the phase shifters 24a and 24b, the reception level detecting and multipath detecting units 27a and 27b, and the AD converters 29a and 29b are provided with respect to 2 lines. However, a plurality of components may be provided corresponding to a number of the antennas.

Outputs from the respective phase shifters 24a and 24b are also inputted into signal processing parts 31a and 31b, respectively. The respective signal processing parts 31a and 31b weight the inputs by 0.5 and allow a combiner 32 to combine them. In the combiner 32, an equal gain combining of signals received from the 2 lines of antennas 21a and 21b is carried out. An envelope detection of a combined signal from the combiner 32 is carried out in a multipath detecting unit 33 as a second multipath detecting unit, and thereby a multipath level Mdc is detected.

In the software processing of the DSP 30, weighting control 35 as a control unit or a coefficient control unit based on signal levels Sda and Sdb, and multipath levels Mda, Mdb and Mdc allows coefficients k and 1-k to be set to the signal processing parts 23a and 23b to be set, where $0 \leq k \leq 1$. Averaging control and phase shifter control 36 is carried out based on the phase difference Pd to output a control signal Ps for switching delay amounts in the phase shifters 24a and 24b. Moreover, a control signal Pn for canceling noise is also outputted when a weighting is changed. That is, when a weighting is carried out for combining signals received from the 2 lines of antennas 21a and 21b, not only based on the reception levels Sda and Sdb of the respective antennas 21a and 21b as in a case of a conventional maximum ratio combining method, but based on 3 conditions of the multipath levels Mda and Mdb, and the multipath level Mdc after an antenna combining, the weighting coefficients k and 1-k are determined to prevent a property of the combined signals from being deteriorated. In addition, in association with a phase focusing operation and a weighting change operation, a phase of the received signal after being combined has discrete points, causing noise in a detected output. A signal Pn is outputted by a trigger of these switching operations, so that these various kinds of noise can be cancelled.

In the diversity receiving apparatus 20, in order to receive signals which have been inputted into the two antennas 21a and 21b, using a superheterodyne method, the RF parts 22a and 22b frequency-convert the inputted high-frequency signals into the intermediate frequency signals. The intermediate frequency signal is converted into a digital signal in the AD converters 29a and 29b, is adjusted in phase in the phase shifters 24a and 24b, is subjected to signal processing such as amplification in the signal processing parts 23a and 23b, and combined in the combiner 25.

The received signal which has been combined is detected by the wave detector 26, and information superimposed therein is demodulated. The reception level detecting and multipath detecting units 27a and 27b detect signal levels of the intermediate frequency signals as the reception levels Sda and Sdb, respectively, and detect envelopes (envelope components) thereof as the multipath levels Mda and Mdb, respectively. The detected reception levels Sda and Sdb, and multipath levels Mda and Mdb are given to the weighting control 35 realized by the software processing of the DSP 30. The signal processing parts 23a and 23b carry out processing such as amplification for the respective received signals in accordance with the weighting coefficients k and 1-k from the weighting control 35. The phase difference Pd between the respective received signals is detected by the phase difference detecting unit 28. The averaging control and phase shifter control 36 of the DSP 30 sets a difference in a delay amount corresponding to the phase difference to the phase shifters 24a and 24b by the control signal Ps, so as to eliminate the phase deference Pd which has been detected in the phase difference detecting unit 28. The combiner 5 combines signals, levels of which have been adjusted in the signal processing parts 23a and 23b and phase differences of which have been eliminated in the phase shifters 24a and 24b. The signal combined in the combiner 25 is inputted into the wave detector 26, and information superimposed in the received radio waves is demodulated.

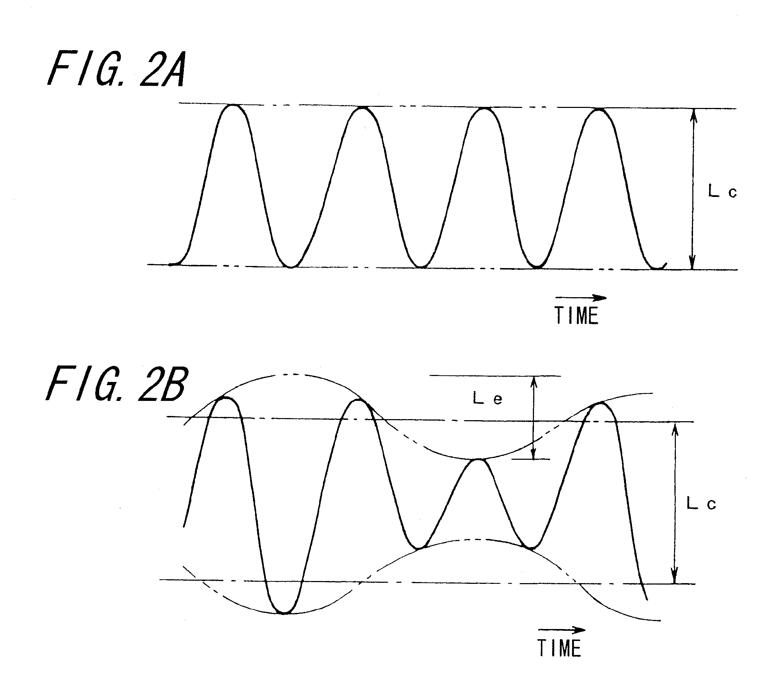

Figs. 2A and 2B show a relationship between a reception level and a multipath level, which are detected in the reception level detecting and multipath detecting units 27a and 27b and multipath detecting unit 33. As shown in Fig. 2A, in a modulation using an FM method, amplitude of a received radio wave is basically constant, and only a level Lc based on field strength is detected as a reception level of a carrier. However, even a radio wave signal modulated by a modulation using the FM method has a change in amplitude due to an effect of multipath or the like, as shown in Fig. 2B. In this case, a change level in amplitude is an amplitude level Le of the envelope. A signal level Lc of the carrier is an average of a change in the envelope.

Incidentally, in the diversity receiving apparatus 20, delay amounts in the phase shifters 24a and 24b can be also changed so that the multipath level Mdc which is detected by the multipath detecting unit is reduced. That is, as a signal combining unit serving as a combining unit, along with the signal processing parts 23a and 23b, and the combiner 25, the averaging control and phase shifter control 36 is designed to be included therein. The diversity receiving apparatus 20 includes the multipath level detecting unit 33 and the signal combining unit, in order to obtain a received signal based on received outputs of the plurality of antennas 21a and 21b when receiving a radio wave signal modulated using a modulating method such as the FM, in which no change in amplitude is produced. Therefore, the radio wave signal is expected to be received in a better condition than when received by a single antenna. The multipath level detecting unit 33 detects a change in amplitude of the received signal as the multipath level Mdc. The signal combining unit obtains the received signal by combining the received outputs of the plurality of antennas while changing the delay amount in the phase shifters 24a and 24b in accordance with a predetermined combining condition, so as to reduce the multipath level Mdc detected by the multipath level detecting unit 33. Therefore, an effect of the multipath can be less received, reducing the multipath noise. In addition, a weighting condition for reducing the multipath level is detected by trying to change the weightings in the signal processing parts 31a and 31b in the weighting control 35, and the weighting coefficients in the signal processing parts 31a and 31b may be changed using the detected weighting.

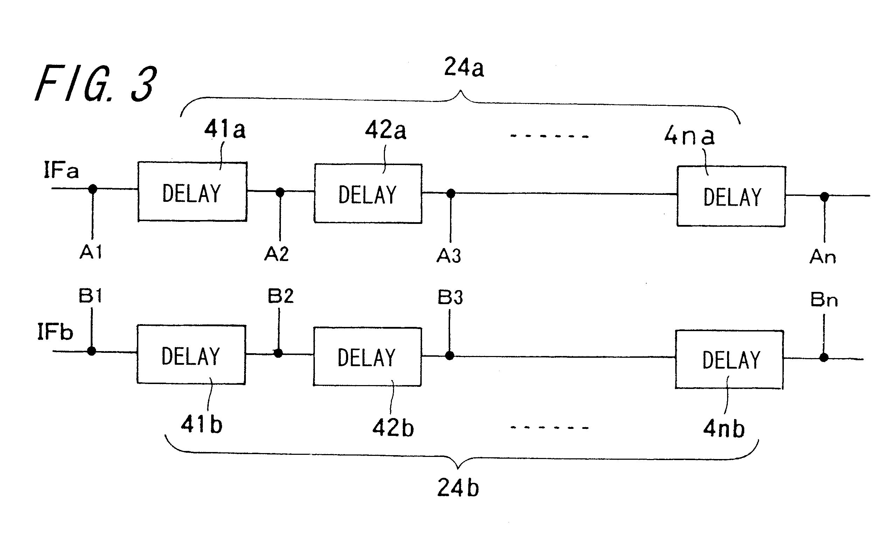

Fig. 3 shows a configuration of the phase shifters 24a and 24b. In the respective phase shifters 24a and 24b, multiple stages of delay parts 41a, 42a, ..., 4na; 41b, 42b, ..., 4nb are provided. The respective delay parts 41a, 42a, ... 4na; 41b, 42b, ..., 4nb delay IF signals A1 and B1 to be inputted in increments of a delay time as a sampling cycle which is set based on a clock signal for sampling or the like, respectively. Outputs of signals delayed in the respective delay parts 41a, 42a, ..., 4na; 41b, 42b, ..., 4nb are taken as A2, A3, ..., An; B2, B3, ..., Bn, respectively. In order to obtain a maximum reception level combined in the wave detector 26 of Fig. 1, and a minimum multipath level in the multipath detecting unit 33, respective signals taken out of the respective phase shifters 24a and 24b can be selected separately. That is, any of A1, A2, ... An and any of B1, B2, ... Bn in Fig. 3 are selected respectively, and the selected outputs are tested to be inputted into the signal processing parts 23a, 23b; 31a, 31b, and thereby a combination capable of obtaining an optimum result should be selected. However, when the combination thereof is selected, an output from the wave detector 26 is stopped. It is possible to prevent an effect on a receiving of information by completing the selecting processing in a short period of time.

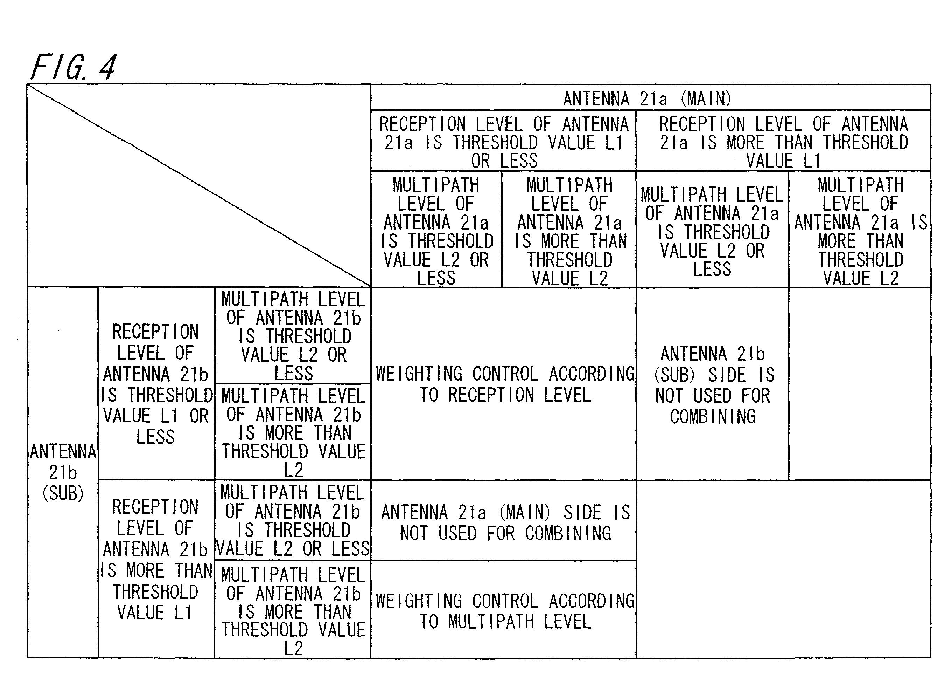

Fig. 4 shows a change condition for weighting control to signal processing parts 23a and 24b, which is carried out in the weighting control 35 of Fig. 1. As the change condition, there are set a threshold value L1 as a reference for determining whether a reception level corresponds to a weak electrical field or not, and a threshold value L2 as a reference for determining whether a multipath level has a large effect of multipath or not. When the reception levels of the main antenna 21a and the sub antenna 21b are both the threshold value L1 or less, the maximum ratio combining is carried out by the weighting control according to the reception level instead of the multipath level. When the reception level of one of the antennas 21a and 21b is more than the threshold value L1 and the other thereof is the threshold value L1 or less, and the multipath level of the antenna having the reception level more than the threshold value L1 is the threshold value L2 or less, only the antenna is used for a receiving. In the other cases, that is, when the reception level of either or both of the antennas 21a and 21b is more than the threshold level L1, and the multipath level of the antenna having the reception level more than the threshold level L1 is more than the threshold value L2 or the multipath levels of both antennas are less than the multipath level L2, the weighting control according to the multipath level is carried out.

In the weighting control according to the reception level, the coefficients are calculated according to the following expressions (1) and (2). As the reception levels of the antennas 21a and 21b are represented as the Sda and Sdb, the weighting coefficients k and 1-k are calculated as follows:

$$k = Sda / (Sda + Sdb) \qquad \ldots (1)$$

$$1-k = Sdb / (Sda + Sdb) \qquad \ldots (2)$$

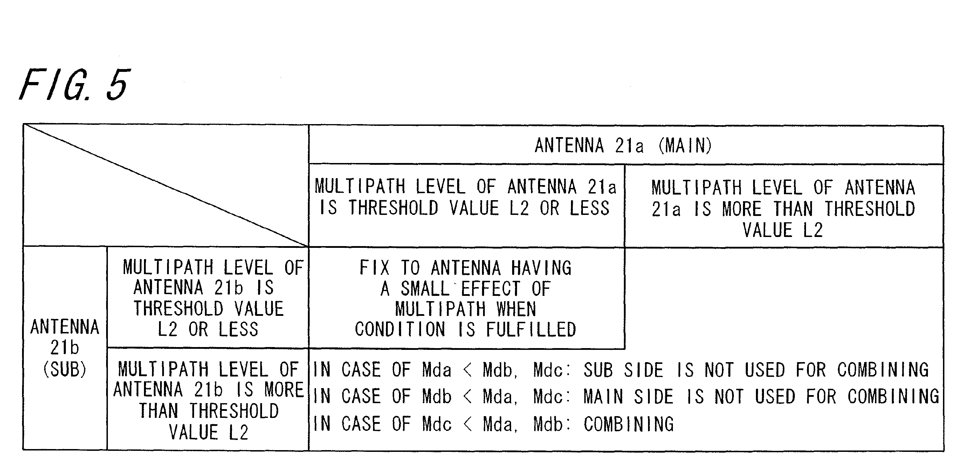

Fig. 5 shows control contents in an area saying "WEIGHTING CONTROL ACCORDING TO MULTIPATH LEVEL" in Fig. 4. When the multipath levels Mda and Mdb of both antennas 21a and 21b are the threshold value L2 or less, the receiving is fixed to the antenna having a small effect of the multipath when the condition is fulfilled. In the other cases, when the multipath level of either of the antennas is less than the multipath level of the other antenna and the combined multipath level Mdc, only the signal received by that antenna is used. Only when the combined multipath level Mdc is less than the multipath levels Mda and Mdb from both of the antennas, the combining is carried out.

Incidentally, when the multipath levels of the antennas 21a and 21b are the threshold value L2 or less in the area saying "WEIGHTING CONTROL ACCORDING TO RECEPTION LEVEL" in Fig. 4, the receiving is "FIXED TO ANTENNA HAVING A SMALL EFFECT OF MULTIPATH WHEN CONDITION IS FULFILLED", only with the above-mentioned weighting according to the multipath level. Since the maximum ratio combining is not applied, sensitivity is not improved in the weak electrical field.

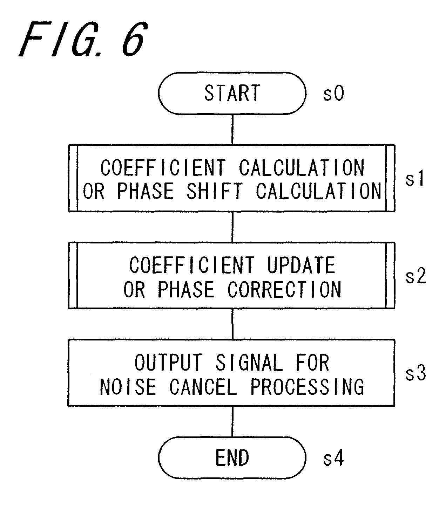

Fig. 6 shows processing in which software of the DSP 30 cancels various kinds of switching noise along with a phase focusing operation and a weighting coefficient change operation in the diversity receiving apparatus 20 of Fig. 1. At Step s0, processing which may possibly cause the various kinds of switching noise is started. At Step s1, calculations of the weighting coefficient and the phase shifting are carried out. This processing itself causes no noise. At Step s2, the coefficient which has been calculated at Step s1 is updated, or phase correcting is carried out. This processing may possibly cause the noise. Therefore, the signal Pn for canceling noise is outputted at following Step s3. Note that a circuit for removing noise, such as a noise canceller, can be provided. Accordingly, a time for outputting a control signal for noise cancel is determined by a trigger of processing which may possibly cause the noise. The processing is completed at Step s4. That is, even though noise is incorporated in the received signal when a combining condition is changed in the signal combining unit, the noise is removed by the noise removing unit, thereby allowing an effect of the noise to be less received.

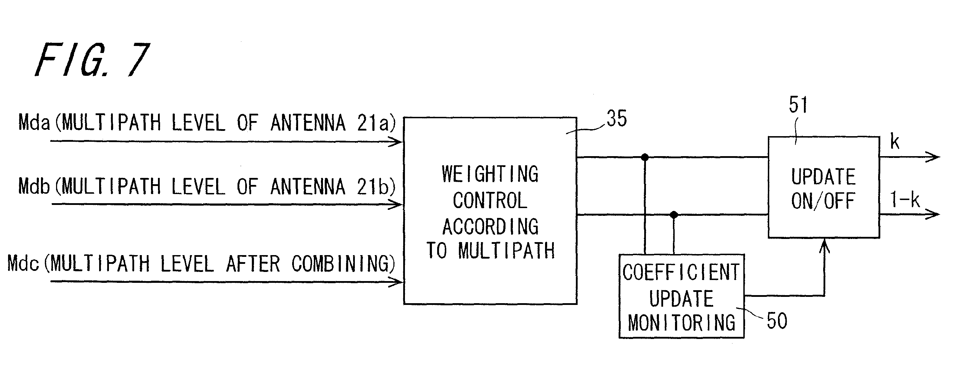

Fig. 7 shows a configuration for limiting the weighting coefficient change operation. In such a case that a receiving circumstance has a tendency to receive an effect of the multipath, the weighting coefficient change operation by the weighting control 35 of Fig. 1 can be frequently carried out. Since a large change in the countable number of values causes the noise to occur, an updating number of the coefficient is monitored by providing a coefficient update monitoring unit 50. The coefficient update monitoring unit 50 as a monitoring unit controls an update ON/OFF unit 51 as a limiting unit so as to be OFF and thereby the coefficient is fixed, when the updating number of the coefficient exceeds a predetermined reference value. That is, when the change in the combining condition in the signal combining unit is monitored, and a frequency of the change becomes more than a predetermined reference, the change is limited. Therefore, the frequency of the change in the combining condition becomes high, allowing prevention of the noise along with the change.

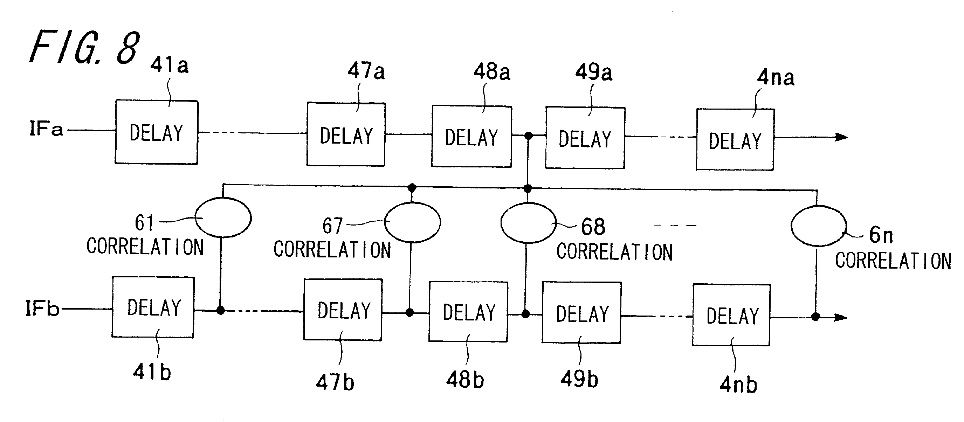

Fig. 8 shows an example of a configuration in which the phase difference detecting unit 28 of Fig. 1 detects a phase difference. The phase shifters 24a and 24b include n pieces of the delay parts 41a, ..., 4na; 41b, ..., 4nb, respectively. Here, in a case of n = 17, for example, 17 ways of the IF signals obtained by shifting the IF signal in increments of one sampling cycle are outputted from the respective phase shifters 24a and 24b. The IF signal from the main antenna 21a delayed by eight sampling cycles from the phase shifter 24a is commonly inputted into respective correlators 61, ..., 6n as a correlating unit. The IF signal from the sub antenna 21b shifted in increments of one sampling cycle is sequentially inputted into the respective correlators 61, ..., 6n. With such a configuration, correlations can be obtained in states in which the received signal of the sub antenna 21b is shifted back and forth in a range of eight sampling cycles. A combination of the IF signals having the substantially same phase provides the strongest correlation.

When a sampling frequency is 5.6448 MHz, and a frequency to be processed is 352.8 kHz, one sampling cycle is calculated in phase as follows: $360° \times (352.8e3 / 5.6448e6) = 22.5°$ pitches. Therefore, a phase focusing of up to $180° (= 22.5° \times 8)$ is possible. In this case, 16 delay parts should be provided. Note that "e3" and "e6" represent "10 to the third power" and "10 to the sixth power", respectively. When a phase is focused at 45°, and a sampling frequency used in a combining diversity is 5.6448 MHz, a frequency processed in the combining diversity is calculated to be 705.6 kHz as follows: (45° / 360°) × 5.6448e6 = 705.6e3. By using the 8 delay parts it is possible to cover 360°. As described above, as the combining condition, the delay amounts in the delay parts 41a, ..., 4na are changed so that a correlation between the received outputs of the antennas 21a and 21b is increased. When the correlation between the received outputs is increased, a phase difference is reduced. Therefore, the phase difference between the received outputs of the antennas 21a and 21b can be focused with accuracy. Note that the phase difference may be obtained by comparing a phase in a characteristic portion of a wave such as a rising portion or a peak portion.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

INDUSTRIAL APPLICABILITY

According to the invention, a receiving apparatus comprises a reception level detecting unit and a combining unit in order to obtain a received signal based on received outputs of a plurality of antennas when receiving a radio wave signal modulated by a modulating method in which no change in amplitude is produced, and the combining unit includes first and second multipath level detecting units. Therefore, the radio wave signal is expected to be received in a better condition than when received by a single antenna. The first and second multipath level detecting units detect a change in amplitude of the received signal as a multipath level. A coefficient is changed based on a reception level detected by the reception level detecting unit, and the multipath levels each detected by the first and second multipath level detecting units. The received signal is obtained by combining the received outputs of the plurality of antennas based on the coefficient determined as described above. Therefore, an effect of multipath can be less received, reducing multipath noise.

Further, the multipath level and the reception level are also detected from the received output with respect to each antenna of the plurality of antennas, and as a combining condition, the received outputs of the plurality of antennas including the multipath level and the reception level detected from the received output with respect to each antenna are combined. Therefore, it is possible to prevent a property improvement after a combining from being reduced. It is possible to change to a suitable combining condition, including a case in which a receiving of a radio wave signal using a single antenna is more preferable.

According to the invention, the coefficient is changed based on the multipath level when the reception level is more than a predetermined threshold value. Therefore, an effect of the multipath can be less received, reducing the multipath noise.

According to the invention, the combining unit includes a phase shifting unit for reducing a phase difference between signals of the respective antennas, with respect to each signal. Each of signals outputted by the phase shifting unit is separately outputted. Therefore, a combining for reducing the multipath level, or a combining for increasing the reception level can be carried out by properly reducing the phase difference.

According to the invention, the phase shifting unit includes a delay part for delaying the signal of the antenna, and a correlating part for showing a correlation between the signals of the respective antennas, and a delay amount of the delay part is changed so that the correlation in the correlating part is increased. When the correlation between the received outputs is increased, the phase difference is decreased, allowing the phase difference between the received outputs of the antennas to be focused with accuracy.

According to the invention, even though noise is incorporated in the received signal when the combining condition is changed in the combining unit, a noise removing unit removes the noise. Therefore, an effect of noise can be less received.

According to the invention, a signal processing circuit includes a control unit for determining an amplification coefficient of the received signal based on the reception level of the received signal, the multipath level of the received signal, and a multipath level of a signal obtained by combining the received signal. Therefore, an effect of the multipath can be less received, allowing the received signal whose multipath noise is reduced to be obtained.

According to the invention, the control unit includes a monitoring unit and a limiting unit. A number of a determining operation of the coefficient is monitored by the monitoring unit, and the determining operation is limited by the limiting unit when the number of the determining operation of the coefficient exceeds a predetermined number. Therefore, it is possible to prevent the number of the determining operation of the coefficient from being increased and causing noise along with a change of the coefficient.

According to the invention, a receiving system comprises two or more antennas, a reception level detecting unit, a first multipath detecting unit, a combining unit, and a second multipath detecting unit. The combining unit includes a signal processing unit and a phase shifting unit. The receiving system updates the coefficient based on the reception level detected by the reception level detecting unit, the multipath level detected by the first multipath detecting unit, and the multipath level detected by the second multipath detecting unit. The received signal is obtained by combining the received outputs of the plurality of antennas based on the coefficient determined as described above. Therefore, an effect of the multipath can be less received, reducing the multipath noise.

Further, the multipath level and the reception level are also detected from the received output with respect to each antenna of the plurality of antennas, and as a combining condition, the received outputs of the plurality of antennas including the multipath level and the reception level detected from the received output with respect to each antenna are combined. Therefore, it is possible to prevent a property improvement after combining from being reduced. It is possible to change to a suitable combining condition, including a case in which a receiving of a radio wave signal using a single antenna is more preferable.

According to the invention, even though noise is incorporated in the received signal when the combining condition is changed in the combining unit, a noise removing unit removes the noise. Therefore, an effect of noise can be less received.

According to the invention, a receiving apparatus comprises two or more antennas, a reception level detecting unit, and a combining unit. The combining unit includes a signal processing unit, and a multipath detecting unit. The coefficient is changed based on the reception level detected by the reception level detecting unit and the multipath level detected by the multipath detecting unit. The received signal is obtained by combining the received outputs of the plurality of antennas based on the coefficient determined as described above. Therefore, an effect of the multipath can be less received, reducing the multipath noise.

Further, the multipath level and the reception level are also detected from the received output with respect to each antenna of the plurality of antennas, and as a combining condition, the received outputs of the plurality of antennas including the multipath level and the reception level detected from the received output with respect to each antenna are combined. Therefore, it is possible to prevent a property improvement after combining from being reduced. It is possible to change to a suitable combining condition, including a case in which a receiving of a radio wave signal using a single antenna is more preferable.

According to the invention, a receiving apparatus comprises two or more antennas, a combining unit, a signal processing unit, a first multipath detecting unit, and a second multipath detecting unit. The coefficient is changed based on the multipath level detected by the first multipath detecting unit and the multipath level detected by the second multipath detecting unit. The received signal is obtained by combining the received outputs of the plurality of antennas based on the coefficient determined as described above. Therefore, an effect of the multipath can be less received, reducing the multipath noise.

## Claims

1. A receiving apparatus comprising:

   two or more antennas for receiving a signal;
   a reception level detecting unit for detecting a reception level of the signal; and
   a combining unit for combining the signal based on a combining condition,
   the combining unit including:

      a signal processing unit for increasing a level of the signal based on a predetermined coefficient;
      a first multipath detecting unit for detecting a multipath level of each of the signals of the antennas; and
      a second multipath detecting unit for detecting a multipath level of a signal combined by the combining unit,

   the coefficient being changed based on the reception level detected by the reception level detecting unit, the multipath level detected by the first multipath detecting unit, and the multipath level detected by the second multipath detecting unit.

2. The receiving apparatus of claim 1, wherein when the reception level is more than a predetermined threshold value, the coefficient is changed based on the multipath level detected by the first multipath detecting unit, and the multipath level detected by the second multipath detecting unit.

3. The receiving apparatus of claim 2, wherein the combining unit includes a phase shifting unit for reducing a phase difference between the signals of the respective antennas, with respect to each of the signals, and the signals to be outputted by the phase shifting unit are independently outputted.

**4.** The receiving apparatus of claim 3, wherein the phase shifting unit further includes a delay part for delaying the signals of the antennas, and a correlating part for showing correlations between the signals of the respective antennas, and a delay amount of the delay part is changed so that a correlation of the correlating part is increased.

**5.** The receiving apparatus of claim 4, wherein the combining unit further includes a noise removing unit for removing incorporated noise involved in changing the combining condition.

**6.** A signal processing circuit comprising:

a control unit for determining an amplification coefficient of a received signal based on a reception level of the received signal, a multipath level of the received signal, and a multipath level of a signal obtained by combining received signals.

**7.** The signal processing circuit of claim 6, wherein the control unit further includes a monitoring unit for monitoring a number of a determining operation of the amplification coefficient, and a limiting unit for limiting the determining operation when the number of the determining operation of the amplification coefficient has exceeded a predetermined number.

**8.** A receiving system comprising:

two or more antennas for receiving a signal;
a reception level detecting unit for detecting a reception level of the signal;
a first multipath detecting unit for detecting a multipath level of the signal;
a combining unit for combining signals based on a combining condition; and
a second multipath detecting unit for detecting a multipath level of a signal combined by the combining unit,
the combining unit further including:

a signal processing unit for increasing a level of the signal based on a predetermined coefficient; and
a phase shifting unit for reducing a phase difference between signals of the respective antennas,

the receiving system further comprising a coefficient control unit for updating the coefficient based on the reception level detected by the reception level detecting unit, the multipath level detected by the first multipath detecting unit, and the multipath level detected by the second multipath detecting unit.

**9.** The receiving system of claim 8, further comprising:

a signal output control unit for outputting a noise removing signal along with outputting a change signal for the combining condition; and
a noise removing unit for removing noise in response to the noise removing signal.

**10.** A receiving apparatus comprising:

two or more antennas for receiving signals;
a reception level detecting unit for detecting reception levels of the signals; and
a combining unit for combining the signals based on a combining condition,
the combining unit including:

a signal processing unit for increasing a level of a signal based on a predetermined coefficient; and
a multipath detecting unit for detecting a multipath level of a signal combined by the combining unit,

the coefficient being changed based on the reception level detected by the reception level detecting unit, and the multipath level detected by the multipath detecting unit.

**11.** A receiving apparatus comprising:

two or more antennas for receiving signals;
a combining unit for combining the signals based on a combining condition;
a signal processing unit for increasing a level of a signal based on a predetermined coefficient;

a first multipath detecting unit for detecting a multipath level of each of the signals of the antennas; and
a second multipath detecting unit for detecting a multipath level of a signal combined by the combining unit,
the coefficient being changed based on the multipath level detected by the first multipath detecting unit, and
the multipath level detected by the second multipath detecting unit.

FIG. 1

FIG. 2A

FIG. 2B

TIME

Lc

Le

13

FIG. 3

## FIG. 4

| | | ANTENNA 21a (MAIN) | | | |
|---|---|---|---|---|---|
| | | RECEPTION LEVEL OF ANTENNA 21a IS THRESHOLD VALUE L1 OR LESS | | RECEPTION LEVEL OF ANTENNA 21a IS MORE THAN THRESHOLD VALUE L1 | |
| | | MULTIPATH LEVEL OF ANTENNA 21a IS THRESHOLD VALUE L2 OR LESS | MULTIPATH LEVEL OF ANTENNA 21a IS MORE THAN THRESHOLD VALUE L2 | MULTIPATH LEVEL OF ANTENNA 21a IS THRESHOLD VALUE L2 OR LESS | MULTIPATH LEVEL OF ANTENNA 21a IS MORE THAN THRESHOLD VALUE L2 |
| ANTENNA 21b (SUB) | RECEPTION LEVEL OF ANTENNA 21b IS THRESHOLD VALUE L1 OR LESS | MULTIPATH LEVEL OF ANTENNA 21b IS THRESHOLD VALUE L2 OR LESS | WEIGHTING CONTROL ACCORDING TO RECEPTION LEVEL | | ANTENNA 21b (SUB) SIDE IS NOT USED FOR COMBINING | |
| | | MULTIPATH LEVEL OF ANTENNA 21b IS MORE THAN THRESHOLD VALUE L2 | | | | |
| | RECEPTION LEVEL OF ANTENNA 21b IS MORE THAN THRESHOLD VALUE L1 | MULTIPATH LEVEL OF ANTENNA 21b IS THRESHOLD VALUE L2 OR LESS | ANTENNA 21a (MAIN) SIDE IS NOT USED FOR COMBINING | | | |
| | | MULTIPATH LEVEL OF ANTENNA 21b IS MORE THAN THRESHOLD VALUE L2 | WEIGHTING CONTROL ACCORDING TO MULTIPATH LEVEL | | | |

EP 1 865 620 A1

# FIG. 5

<table>
<tr>
<td rowspan="2"></td>
<td colspan="2" align="center">ANTENNA 21a (MAIN)</td>
</tr>
<tr>
<td align="center">MULTIPATH LEVEL OF ANTENNA 21a IS THRESHOLD VALUE L2 OR LESS</td>
<td align="center">MULTIPATH LEVEL OF ANTENNA 21a IS MORE THAN THRESHOLD VALUE L2</td>
</tr>
<tr>
<td rowspan="2" align="center">ANTENNA 21b (SUB)</td>
</tr>
</table>

| | MULTIPATH LEVEL OF ANTENNA 21a IS THRESHOLD VALUE L2 OR LESS | MULTIPATH LEVEL OF ANTENNA 21a IS MORE THAN THRESHOLD VALUE L2 |
|---|---|---|
| **ANTENNA 21b (SUB)** — MULTIPATH LEVEL OF ANTENNA 21b IS THRESHOLD VALUE L2 OR LESS | FIX TO ANTENNA HAVING A SMALL EFFECT OF MULTIPATH WHEN CONDITION IS FULFILLED | |
| MULTIPATH LEVEL OF ANTENNA 21b IS MORE THAN THRESHOLD VALUE L2 | IN CASE OF $Mda < Mdb$, $Mdc$: SUB SIDE IS NOT USED FOR COMBINING<br>IN CASE OF $Mdb < Mda$, $Mdc$: MAIN SIDE IS NOT USED FOR COMBINING<br>IN CASE OF $Mdc < Mda$, $Mdb$: COMBINING | |

EP 1 865 620 A1

## FIG. 6

START — s0

COEFFICIENT CALCULATION
OR PHASE SHIFT CALCULATION — s1

COEFFICIENT UPDATE
OR PHASE CORRECTION — s2

OUTPUT SIGNAL FOR
NOISE CANCEL PROCESSING — s3

END — s4

# FIG. 7

Mda (MULTIPATH LEVEL OF ANTENNA 21a)

Mdb (MULTIPATH LEVEL OF ANTENNA 21b)

Mdc (MULTIPATH LEVEL AFTER COMBINING)

WEIGHTING
CONTROL
ACCORDING
TO MULTIPATH
35

51

UPDATE
ON/OFF

k

1-k

COEFFICIENT
UPDATE
MONITORING
50

EP 1 865 620 A1

FIG. 8

EP 1 865 620 A1

# FIG. 9

EP 1 865 620 A1

# FIG. 10

REFLECTING OBJECT — 12

Vd1

Vd2

Vu2

Vu1

1a

2a

11

10

TRANSMITTING STATION

Vd: DESIRED WAVE
Vu: INTERFERING WAVE

MOVEING

EP 1 865 620 A1

## INTERNATIONAL SEARCH REPORT

| International application No. |
| --- |
| PCT/JP2006/306838 |

**A. CLASSIFICATION OF SUBJECT MATTER**
*H04B7/08*(2006.01)

According to International Patent Classification (IPC) or to both national classification and IPC

**B. FIELDS SEARCHED**

Minimum documentation searched (classification system followed by classification symbols)
H04B7/08

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 61-131625 A (NEC Corp.),<br>19 June, 1986 (19.06.86),<br>Full text; Figs. 1 to 2<br>(Family: none) | 10<br>1-9,11 |
| A | JP 2002-026786 A (NEC Corp.),<br>25 January, 2002 (25.01.02),<br>Full text; Figs. 1 to 8<br>(Family: none) | 1-11 |
| A | JP 2003-134016 A (NEC Corp.),<br>09 May, 2003 (09.05.03),<br>Full text; Figs. 1 to 5<br>& US 2005/0014469 A1 & EP 1447926 A1 | 1-11 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>21 April, 2006 (21.04.06) | Date of mailing of the international search report<br>02 May, 2006 (02.05.06) |
| --- | --- |
| Name and mailing address of the ISA/<br>Japanese Patent Office | Authorized officer |
| Facsimile No. | Telephone No. |

Form PCT/ISA/210 (second sheet) (April 2005)

## INTERNATIONAL SEARCH REPORT

International application No.

PCT/JP2006/306838

C (Continuation).    DOCUMENTS CONSIDERED TO BE RELEVANT

| Category* | Citation of document, with indication, where appropriate, of the relevant passages | Relevant to claim No. |
|---|---|---|
| A | JP 09-200102 A  (Matsushita Electric Industrial Co., Ltd.),<br>31 July, 1997 (31.07.97),<br>Full text; Figs. 1 to 2<br>(Family: none) | 1-11 |

Form PCT/ISA/210 (continuation of second sheet) (April 2005)

**EP 1 865 620 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001345780 A